# EUROPEAN PATENT APPLICATION

(11) **EP 4 707 765 A1**
(43) Date of publication of application: **11.03.2026**
(21) Application number: 24800167.9
(22) Date of filing: 03.04.2024
(51) Int. Cl.: G01M 3/32

(54) **WATERPROOFING TEST APPARATUS AVAILABLE FOR VARIOUS TYPES OF SEMI-FINISHED PRODUCTS**

(30) Priority: 03.05.2023 KR 20230057618
(71) Applicant: DMC Co., Ltd., Suwon-si Gyeonggi-do 16648 (KR)
(72) Inventor: KIM, Dong Un, Incheon 21661 (KR)
(74) Representative: Noréns Patentbyrå AB
(86) International application number: PCT/KR2024/004343
(87) International publication number: WO 2024/228479

(57) **Abstract**

The present invention relates to a waterproofing test apparatus for semi-finished products, wherein a chamber space is formed in close contact with the surface and holes of a semi-finished product for waterproofing test of the semi-finished product and, more specifically, to a waterproofing test apparatus available for various types of semi-finished products, wherein waterproofing tests can be performed even for different types of semi-finished products. The waterproofing test apparatus for semi-finished products, according to the present invention, comprises: a body; a cover elevated and lowered to cover the body; an inner pad that is provided to be replaceable on top of the body and seals the inside of a semi-finished product; an outer pad that is provided to be replaceable at the bottom of the cover and seals the outside of the semi-finished product; a sealing block provided in the body to be moved forward and backward; and a movable block provided in the cover to push and move the sealing block forward, wherein the position of the movable block can be adjusted in the cover.

## Description

### Technical Field

The present disclosure relates to a semi-finished product waterproofing test apparatus that comes into close contact with surfaces and holes of a semi-finished product to form a chamber space for a waterproofing test for the semi-finished product. More particularly, the present disclosure relates to a waterproofing test apparatus available for various types of semi-finished products, the waterproofing test apparatus being capable of performing a waterproofing test on various types of semi-finished products.

### Background Art

Portable devices such as smartphones are characterized by their portability, which leads to frequent use in environments where they are exposed to water, and they include water-sensitive electronic components therein. Therefore, the water resistance of high-priced portable devices is a key factor determining the quality.

Therefore, manufacturers of portable devices have focused on providing life water resistance, even if it's not fully waterproof. In other words, manufacturers have invested heavily to produce portable devices with life water resistance that prevents moisture from penetrating inside when the device is exposed to water.

The applicant has proposed a waterproofing test apparatus for semi-finished products of devices with water resistance, such as Korean Patent No. 10-1442072 "Chamber unit for checking leak of half-finished goods", Korean Patent No. 10-2022328 "Device for checking leak of half-finished goods", etc.

FIG. 1 is a view of the Korean Patent No. 10-2022328, and the device includes a lower body, an upper body arranged on an upper portion of the lower body and capable of being elevated and lowered, a lower sealing pad provided on the upper portion of the lower body, and an upper sealing pad provided on a lower portion of the upper body. The lower sealing pad and upper sealing pad come into close contact with surfaces and holes of a semi-finished product to form a chamber space that regionally separates the holes and the internal components of the semi-finished product to test the water resistance of the components.

FIGS. 2a and 2b are product images of Korean Patent No. 10-2022328, a sealing block including a sliding block and a covering member is located at an edge of the body to be movable forward and rearward, and the cover includes a movable member that pushes and moves the sealing block forward while being lowered along an inclined surface. At this point, the covering member of the sealing block that is moved forward by the movable member seals side surface holes formed on a side surface of a semi-finished product.

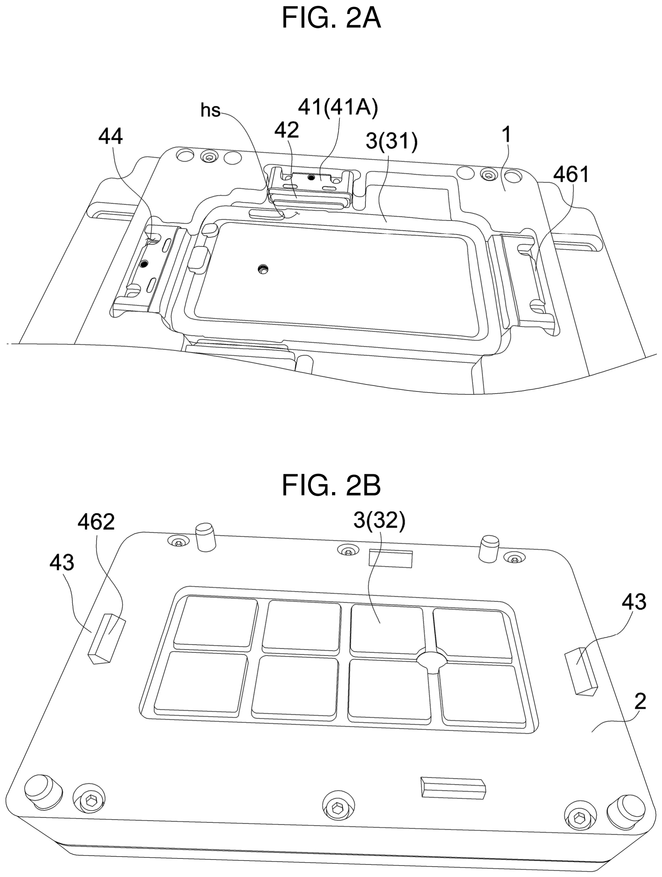

In the related art shown in FIGS. 2a and 2b, the position of the movable member cannot be changed, so it can be used for specific types of semi-finished products. Since numerous smartphone models are released annually. Therefore, discarding the used waterproofing test apparatus for the semi-finished product of discontinued smartphone models and manufacturing a dedicated waterproofing test apparatus for semi-finished products of newly released smartphone models results in significant resource waste.

### Disclosure

### Technical Problem

Accordingly, the present disclosure has been made keeping in mind the above problem that the conventional waterproofing test apparatus can only perform a waterproofing test on a specific type of semi-finished products, and an objective of the present disclosure is to provide a waterproofing test apparatus available for various types of semi-finished products, which is capable of use for various types of bodies by adjusting the position of a movable block within a cover, and is capable of performing a waterproofing test for various types of semi-finished products with one waterproofing test apparatus by adjusting the position of a sealing block of a body as well as the movable block of the cover.

### Technical Solution

In order to achieve the above objective, according to the present disclosure, there is provided a waterproofing test apparatus available for various types of semi-finished products, the waterproofing test apparatus including:
a body;
a cover elevated and lowered to cover the body;
an inner pad provided to be replaceable at an upper portion of the body, and sealing an inner surface of a semi-finished product;
an outer pad provided to be replaceable at a lower portion of the cover, and sealing an outer surface of the semi-finished product;
a sealing block provided at the body and movable forward and rearward; and
a movable block provided at the cover, and pushing and moving the sealing block forward,
wherein the position of the movable block may be adjustable within the cover.

Furthermore, the position of the sealing block may be adjustable within the body,
an edge of the cover may include a receiving groove in which a portion of the movable block is received, and
a bottom of the receiving groove may include fastening grooves that are fastened to the movable block.

### Advantageous Effects

According to the present disclosure, the waterproofing test apparatus available for various types of semi-finished products can perform waterproofing tests on various types of semi-finished products by replacing bodies from one cover or with one cover and one body, thereby preventing resource waste and providing high utility for industrial development.

### Description of Drawings

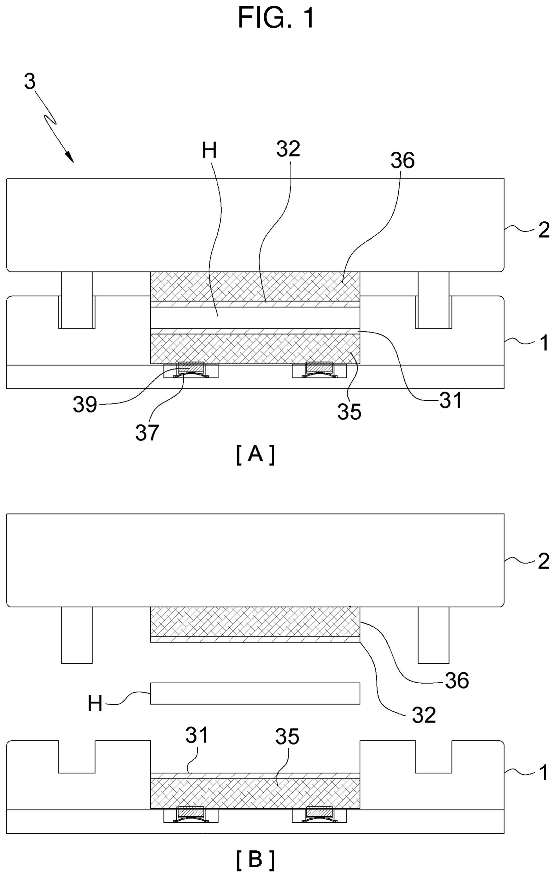

FIG. 1 is a view showing a waterproofing test apparatus for semi-finished products according to the related art.
FIGS. 2a to 2b are views showing the waterproofing test apparatus for semi-finished products according to the related art.
FIG. 3 is a view showing an example of a body of a waterproofing test apparatus available for various types of semi-finished products according to the present disclosure.
FIG. 4 is a view showing an example of a cover of the waterproofing test apparatus available for various types of semi-finished products according to the present disclosure.
FIG. 5 is a main part view showing a guide groove and a sealing block of the body of the waterproofing test apparatus available for various types of semi-finished products according to the present disclosure.

### [Description of Reference Numeral]

110: body 111: seating groove
113: guide groove 120: cover
121: seating groove 123: receiving groove
125: fastening grooves 130: inner pad
140: outer pad 150: sealing block
160: movable block 170: magnet

### Best Mode

Hereinbelow, according to the present disclosure, a waterproofing test apparatus available for various types of semi-finished products will be described in detail with reference to accompanying drawings.

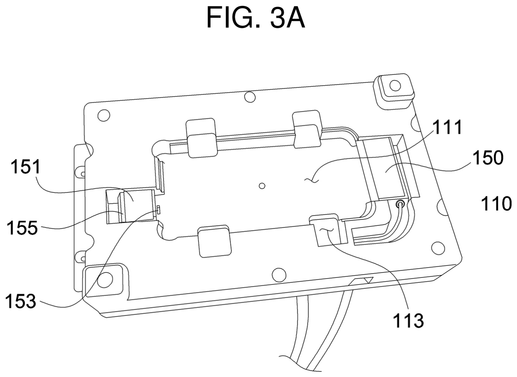

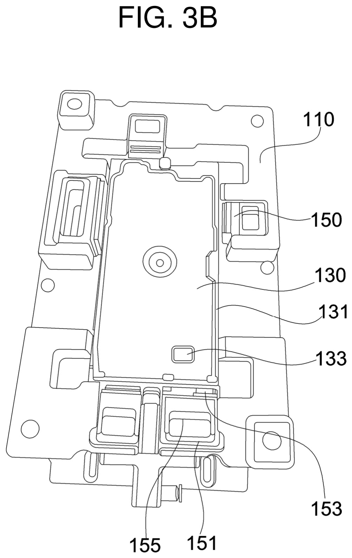

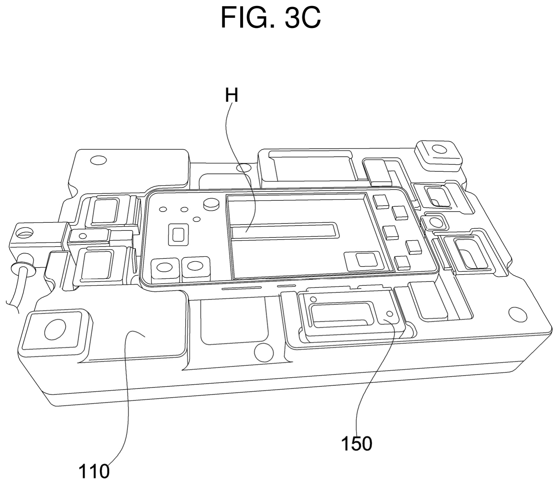

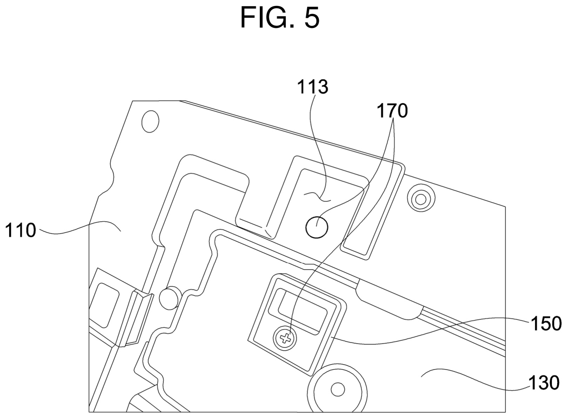

As shown in FIGS. 3a, 3b, 3c, to FIG. 5, according to the present disclosure, the waterproofing test apparatus available for various types of semi-finished products includes a body 110, a cover 120, an inner pad 130, an outer pad 140, a sealing block 150, and a movable block 160.

FIG. 3a is a view showing the body 110 to which the inner pad 130 is not coupled. FIG. 3b is a view showing another the body 110 to which the inner pad 130 is coupled. FIG. 3c is a view showing another the body 110 with a semi-finished product H placed on the inner pad 130.

As shown in FIG. 3a, a central portion of the body 110 includes a seating groove 111 on which the inner pad 130 is seated, and an edge of the seating groove 111 may include guide grooves 113 formed to be connected to the seating groove 111 to guide forward and rearward movements of the sealing block 150.

The seating groove 111 must be sufficiently sized so that various types of inner pads 130 can be coupled to the body and replaced.

Each guide groove 113 is formed at each position where a side surface hole is expected to be formed on various types of semi-finished products H, and the sealing block 150 is located in the guide groove 113 at a position where the side surface hole of the semi-finished product is actually waterproofing-tested. Furthermore, a reserve groove is formed on the entire edge of the seating groove 111, and a guide wall that can be moved and held within the reserve groove is held to the reserve groove at a position with the side surface hole to form the guide grooves 113.

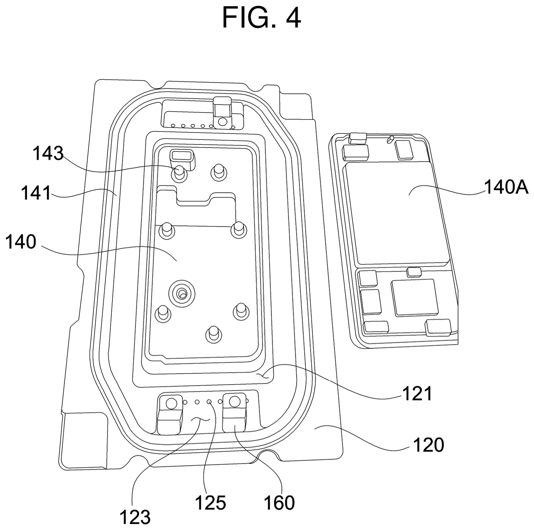

FIG. 4 is a view showing the cover 120 to which the outer pad 140 is coupled.

The cover 120 is located at an upper portion of the body 110 and is elevated or lowered by a cylinder to cover or expose the body 110.

The cover 120 may include an outer pad 140 on which another seating groove 121 is seated, and a receiving groove 123, in which a portion of the movable block 160 is received, is formed outside the seating groove 121. The seating groove 121 of the cover 210 must be sufficiently sized so that the various types of outer pads 140 can be seated thereon.

A bottom of the receiving groove 123 may include fastening grooves 125 to which the movable block 160 is fastened. In FIG. 4, based on the drawing, the receiving groove 123 is formed only at each of upper and lower portions of the cover 120, but the receiving groove 123 may be formed on each of left and right portions of the cover 120.

The inner pad 130 and the outer pad 140 may be respectively coupled to the seating groove 111 of the body 110 and the seating groove 121 of the cover 120 to be replaceable. FIG. 4 is a view showing a different type of replaceable outer surface pad 140A aside of the cover 120.

The inner pad 130 and the outer pad 140 are brought into close contact with a surface and a hole of the semi-finished product H at an inner surface and an outer surface of the semi-finished product H, which will be tested, to form a chamber space for a waterproofing test.

At this point, the chamber space is formed such that the inner pad 130 of the body 110 and the outer pad 140 of the cover 120 seal an inner surface edge and an outer surface edge of the semi-finished product H, and the holes formed on the inner surface and the outer surface of the semi-finished product H, and the sealing block 150 seals the side surface hole of the side surface of the semi-finished product H. Based on the semi-finished product H, when air is injected into a lower chamber space (or upper chamber space), and a problem in waterproofing occurs, the injected air leaks through the upper chamber space to cause a change in pressure, which is detected.

The inner pad 130 and the outer pad 140 include contact portions 131 and 141 in close contact with the inner surface and the outer surface of the semi-finished product H, and protrusions 133 and 143 in close contact with the holes of the inner surface and the outer surface of the semi-finished product H.

The sealing block 150 includes a forward and rearward moving portion 151 that is moved forward and rearward within the guide grooves 113 of the body 110, and a sealing portion 153 provided in front of the forward and rearward moving portion 151 and sealing the side surface hole of the semi-finished product H.

The sealing block 150 may be seated on one of the plurality of guide grooves 113 formed in the body 110, or seated on the guide grooves 113 formed at a random position by the guide wall within the reserve groove, thereby adjusting position.

The movable block 160 is fastened to one of the fastening grooves 125 formed on the bottom of the receiving groove 123 of the cover 120. The movable block 160 may be fastened to one of the plurality of fastening grooves 125 and adjusted in position.

One or both of the sealing block 150 and the movable block 160 may include an inclined surface 155 that is pushed when the movable block 160 is lowered and brought into contact with the sealing block 150.

Referring to FIG. 5, magnets 170 are provided at the bottom of each guide grooves 113 of the body 110 and a lower surface of the sealing block 150, and the magnets 170 allow the sealing block 150 pushed and moved forward by the movable block 160 to be moved rearward and then recovered to its original portion when the movable block 160 is separated.

In the above description, although the waterproofing test apparatus available for various types of semi-finished products having specific shapes and configurations has been described for illustrative purposes with reference to the accompanying drawings, those skilled in the art will appreciate that various modifications, additions, and substitutions are possible, and such modifications, additions, and substitutions are to be interpreted as belonging to the scope of the present disclosure.

## Claims

1. A waterproofing test apparatus available for various types of semi-finished products, the waterproofing test apparatus comprising:
a body;
a cover elevated and lowered to cover the body;
an inner pad provided to be replaceable at an upper portion of the body, and sealing an inner surface of a semi-finished product;
an outer pad provided to be replaceable at a lower portion of the cover, and sealing an outer surface of the semi-finished product;
a sealing block provided at the body and movable forward and rearward; and
a movable block provided at the cover, and pushing and moving the sealing block forward,
wherein the position of the movable block is adjustable within the cover.

2. The waterproofing test apparatus of claim 1, wherein the position of the sealing block is adjustable within the body.

3. The waterproofing test apparatus of claim 1, wherein an edge of the cover comprises a receiving groove in which a portion of the movable block is received, and
a bottom of the receiving groove comprises fastening grooves that are fastened to the movable block.
